# EUROPÄISCHE PATENTSCHRIFT

(11) **EP 1 616 692 B1**
(45) Veröffentlichungstag und Bekanntmachung des Hinweises auf die Patenterteilung: **27.05.2009**
(21) Anmeldenummer: 05014494.8
(22) Anmeldetag: 05.07.2005
(51) Int. Cl.: B30B 15/06, B30B 15/34, B32B 37/18, B32B 37/10

(54) **Laminator für das Laminieren von Bauteilen**
Laminator to produce parts
Presse pour laminer des pièces

(30) Priorität: 14.07.2004 DE 102004034204
(43) Veröffentlichungstag der Anmeldung: 18.01.2006
(73) Patentinhaber: Meier Vakuumtechnik GmbH, 46395 Bocholt (DE)
(72) Erfinder: Stevens, Hans-Gerd Dipl.-Ing., 46399 Bocholt (DE); Tidden, Paul, 46499 Hamminkeln (DE)
(74) Vertreter: Linnemann, Winfried

(56) Entgegenhaltungen:
- EP-A- 0 365 677
- DE-A1- 2 017 402
- DE-C1- 4 337 483
- US-A- 5 158 132
- US-A- 5 942 066
- PATENT ABSTRACTS OF JAPAN Bd. 016, Nr. 494 (M-1324), 13. Oktober 1992 (1992-10-13) & JP 04 182100 A (KITAGAWA ELABORATE MACH CO LTD), 29. Juni 1992 (1992-06-29)

## Beschreibung

Die vorliegende Erfindung betrifft Laminatoren für das Laminieren von Bauteilen, insbesondere Solarzellenmodule oder Verbundglasscheiben, durch kombinierte Anwendung von Andrückkraft und Wärme, wobei der Laminator für das Erzeugen der Wärme wenigstens eine Heizplatte aufweist, wobei die Heizplatte durch wenigstens eine elektrische Heizeinrichtung auf eine vorgebbare Soll-Temperatur aufheizbar ist, wobei in oder an der Heizplatte mindestens ein Meßfühler zur Erfassung der Ist-Temperatur der Heizplatte angeordnet ist, wobei mittels einer Regeleinrichtung die Heizleistung der Heizeinrichtung nach Maßgabe der Differenz zwischen Soll- und Ist-Temperatur regelbar ist und wobei die Heizplatte mindestens ein Hauptheizfeld und mindestens ein Zusatzheizfeld mit einer gegenüber dem Hauptheizfeld unabhängig regelbaren Heizleistung aufweist.

Laminatoren und deren Heizplatten sind aufgrund ihrer weiten Verbreitung, insbesondere für die Herstellung von Solarzellenmodulen oder Verbundglasscheiben, bekannt. Bei diesen bekannten, elektrisch beheizbaren Laminatorheizplatten ist es üblich, eine einzelne oder mehrere Heizdraht- oder Heizstabanordnungen schleifenförmig im Inneren der Heizplatte oder unter der Heizplatte anzuordnen. Wenn mehrere Heizdrähte oder Heizstäbe verwendet werden, wird die Heizplatte üblicherweise in mehrere Heizbereiche unterteilt, die jeweils quer zur längsten Erstreckung der Fläche der Heizplatte verlaufen. Durch die beschriebene Anordnung von Heizdrähten oder Heizstäben wird zwar ein relativ gleichmäßiger Wärmeenergieeintrag pro Flächeneinheit der Heizplatte in diese erreicht, jedoch führt dies nicht immer zu der gewünschten gleichmäßigen Temperatur an der Oberfläche der Heizplatte, die mit einem zu laminierenden Bauteil, z.B. in Form eines Solarzellenmoduls oder einer Verbundglasscheibe, in Kontakt kommt. Dies kann bei der Produktion zu einer Verminderung der Qualität der hergestellten Bauteile oder sogar zur Herstellung von nicht verwendbarem Ausschuß führen. Die ungleichmäßige Temperaturverteilung in der Oberfläche der Heizplatte hat verschiedene Ursachen; zum einen ist sie darauf zurückzuführen, daß an den Randbereichen der Heizplatte die Wärmeabstrahlung an die Umgebung größer ist als in einem zentralen Bereich der Heizplatte. Diese Ungleichmäßigkeit der Temperatur wird um so deutlicher, je höher die Betriebs- oder Solltemperatur der Heizplatte ist, weil die Wärmeverluste durch Wärmeabstrahlung an die Umgebung proportional zur Temperaturdifferenz zwischen der Heizplatte und der Umgebung sind. Eine andere Ursache liegt darin, daß die zu laminierenden Bauteile meistens eine Form haben, die mit der Form der Heizplatte nicht deckungsgleich, sondern kleiner ist. Dadurch ist die Wärmeentnahme aus der Heizplatte über die Fläche der Heizplatte gesehen ungleichmäßig.

Das Dokument US 5 158 132 A schlägt deshalb eine dreilagige Heizplatte vor, mit einer passiven Wärmeverteilungsplatte als erster Lage, mit einer zweiten Lage aus mehreren Heizelementen, die nebeneinander in der Fläche verteilt angeordnet sind, und mit einer dritten Lage, die als eine Wärmerückführungsplatte ausgeführt ist. Die Wärmeverteilung an der Oberfläche wird bei diesem Stand der Technik durch die Wärmeverteilungsplatte zwar bis zu einem gewissem Grade vergleichmäßigt, aber eine Wärmeerzeugung findet hier nur in einer einzigen Lage der Heizplatte statt, so dass eine Vergleichmäßigung über die Abstände zwischen den Heizelementen nur indirekt möglich ist. Außerdem ist diese Lösung aufwendig, teuer und insgesamt ineffizient, da die beiden passiven Lagen jeweils zusätzlich aufgeheizt werden müssen.

Weiterhin sind aus der einschlägigen Praxis der Laminatoren Laminatorheizplatten bekannt, die entweder nur mit einem erhitzten Wärmetransportmedium, üblicherweise Öl, beheizt werden oder die eine Kombination von elektrischer Beheizung und Beheizung durch ein Wärmetransportmedium aufweisen. Nachteilig ist hier allerdings, daß die Verwendung eines fluiden Wärmetransportmediums, wie Öl, einen erhöhten Herstellungsaufwand für die Heizplatte und einen erhöhten Wartungsaufwand im Betrieb der Heizplatte erfordert. In der Heizplatte müssen Kanäle für die Führung des Wärmetransportmediums hergestellt werden, das Wärmetransportmedium muß durch mindestens eine Pumpe umgewälzt werden und es müssen Sicherheitsmaßnahmen für einen Leckagefall vorgesehen werden. Außerdem muß das Wärmetransportmedium in regelmäßigen Abständen ausgetauscht werden, da es infolge der hohen Temperatur einer raschen Alterung unterliegt. Deshalb wird bei diesen Heizplatten der Vorteil einer gleichmäßigeren Temperatur mit einem erhöhten Herstellungs-, Betriebs- und Wartungsaufwand teuer erkauft.

Für die vorliegende Erfindung stellt sich deshalb die Aufgabe, Laminatoren der eingangs genannten Art zu schaffen, die die oben dargelegten Nachteile vermeiden und bei denen mit einer rein elektrischen Beheizung eine sehr gleichmäßige Oberflächentemperatur der Heizplatte mit einem relativ geringen technischen Aufwand erreicht wird.

Eine erste Lösung dieser Aufgabe gelingt erfindungsgemäß mit einem Laminator der eingangs genannten Art, der dadurch gekennzeichnet ist, dass die Heizplatte mehrlagig ist und dass mehrere Zusatzheizfelder unter und/oder über dem mindestens einen Hauptheizfeld vorgesehen sind.

Bei dem erfindungsgemäßen Laminator können die Bereiche seiner Heizplatte, in denen im konventionellen Betrieb zu niedrige Temperaturen auftreten, bedarfsgerecht zusätzlich beheizt werden, wodurch ein unerwünschtes und schädliches bereichsweises Absinken der Heizplattentemperatur unter deren Soll-Temperatur vermieden wird. Die zusätzlich zu beheizenden Bereiche der Heizplatte sind vorzugsweise deren Bereiche, bei denen die Wärmeabgabe an die zum Zweck des Laminierens zu erwärmenden Bauteile besonders hoch ist, oder deren Randbereiche, bei denen die Wärmeabstrahlung in die Umgebung höher ist als im zentralen Bereich. Gemäß Erfindung können derartige Bereiche mit einer höheren Heizleistung beaufschlagt werden, um die dort höheren Wärmeverluste auszugleichen. Dadurch, dass die Heizplatte mehrlagig ist und dass ein oder mehrere Zusatzheizfelder unter und/oder über dem mindestens einen Hauptheizfeld vorgesehen sind, kann z.B. ein die gesamte Fläche der Heizplatte einnehmendes Hauptheizfeld für eine Grundbeheizung der Heizplatte sorgen, während ein oder mehrere, darunter und/oder darüber vorgesehene zusatzheizfelder die bedarfsweise zusatzbeheizung bieten. Durch passende Wahl und Einstellung der Heizleistungen kann so im Ergebnis auf der Oberfläche der Heizplatte über deren gesamte Fläche eine gleichmäßige Temperatur eingestellt und im Betrieb eingehalten werden, was für die Herstellung von qualitativ hochwertigen Produkten erwünscht und oft sogar Voraussetzung ist. Die Heizplatte kann dabei über ihre gesamte Oberfläche genutzt werden, weil die Temperaturverteilung sehr gleichmäßig ist. Die unwirtschaftliche Verwendung von überdimensionierten Heizplatten, bei denen die Randbereiche wegen ihrer zu niedrigen Temperatur bewußt nicht von dem auf der Heizplatte zu laminierenden Bauteil belegt werden, wird so vermieden. Damit wird auch ein Beitrag zu einem wirtschaftlicheren Betrieb der Heizplatte und des mit dieser Heizplatte ausgerüsteten Laminators insgesamt geleistet.

Eine erste Weiterbildung schlägt vor, daß für jedes Zusatzheizfeld ein dessen Ist-Temperatur erfassender Meßfühler vorgesehen ist und daß jedes Zusatzheizfeld eine eigene, hinsichtlich ihrer Heizleistung nach Maßgabe der Differenz zwischen einer vorgebbaren Soll-Temperatur und der erfaßten Ist-Temperatur separat regelbare Heizeinrichtung aufweist. Hierdurch wird eine besonders exakte Einhaltung einer gewünschten Soll-Temperatur einheitlich über die gesamte Fläche der Heizplatte ermöglicht. Jedes Zusatzheizfeld ist für sich regelbar, so daß auch besondere Einflüsse berücksichtigt und ausgeglichen werden können, wie z.B. unterschiedliche Abstände verschiedener Bereiche der Heizplatte in einer geschlossenen Vorrichtung mit einer sich öffnenden und schließenden Zuführ- oder Abführöffnung, durch die periodisch kühle Umgebungsluft in das Innere der Vorrichtung gelangt.

Um für jede Heizplatte unabhängig von ihren Einsatzbedingungen jeweils eine möglichst gute Lösung zu ermöglichen, wird weiter vorgeschlagen, daß die Zusatzheizfelder relativ zum Hauptheizfeld in oder an der Heizplatte frei plazierbar sind. Die Zusatzheizfelder können also bedarfsgerecht genau dort plaziert werden, wo zusätzliche Wärmeenergie benötigt wird. Die Plazierung kann dabei z.B. von der Form und Art des jeweils zu laminierenden Bauteils abhängen.

Vorzugsweise ist über die Fläche der Heizplatte gesehen das mindestens eine Hauptheizfeld zentral angeordnet. Der zentrale, meist flächenmäßig größte Bereich einer Heizplatte unterliegt in der Regel den geringsten äußeren Einflüssen, die die Temperatur ungünstig verändern, sodass dort eine technisch einfache gleichmäßige Beheizung auch zu einer ausreichend gleichmäßigen Temperatur führt.

Im Sinne einer möglichst einfachen Nachrüstung von bereits vorhandenen Laminatoren mit konventionellen Heizplatten schlägt eine Ausführung der Erfindung vor, dass die Heizplatte durch eine gängigen Heizplatte und durch mehrere mit dieser wärmeleitend verbundene, die zugehörige eigene Heizeinrichtung aufweisende Zusatzheizplatten, die mindestens ein Zusatzheizfeld darstellen, gebildet ist. Die Zusatzheizplatten werden an der gängigen, vorhandenen Heizplatte dort angebracht, wo im Betrieb deren Temperatur bisher zu niedrig war. Die Zusatzheizplatten sorgen dann durch die von ihnen zusätzlich eingetragene Wärmeenergie dafür, dass die Temperatur der Heizplatte in dem betreffenden Bereich auf eine gewünschte höhere Temperatur angehoben wird. Es wird so über die Fläche der Heizplatte gesehen eine gewünschte gleichmäßige Temperatur erreicht, ohne dass eine komplette neue Heizplatte angeschafft werden muss.

Bevorzugt ist dabei weiter vorgesehen, dass die Zusatzheizplatten jeweils mit der gängigen Heizplatte verschraubt oder verklebt sind. Bei einer Verschraubung besteht die Möglichkeit, bei Bedarf die Anordnung der Zusatzheizplatten nachträglich leicht zu ändern. Bei einem Verkleben sind die Zusatzheizplatten sehr schnell und einfach mit der übrigen Heizplatte verbindbar, was den Montageaufwand niedrig hält. Dabei sind selbstverständlich entsprechend hitzefeste und wärmeleitende Klebstoffe einzusetzen, die aber auf dem Markt verfügbar sind.

Eine Alternative schlägt vor, dass die Heizplatte mehrteilig in Segmentbauweise ausgeführt ist, wobei mindestens ein Hauptheizplattenteil das Hauptheizfeld bildet und wobei mehrere mit diesem verbundene Zusatzheizplatten die Zusatzheizfelder bilden. Zusätzlich können dabei auch einander benachbarte Zusatzheizplatten miteinander verbunden sein. Diese Ausführung der Heizplatte erlaubt einen variablen Aufbau, wodurch Heizplatten in unterschiedlichen Größen aus den verschiedenen Heizplattenteilen nach Bedarf zusammengesetzt werden können. Hierdurch wird also vorteilhaft ein modulares Baukastensystem zur Verfügung gestellt, das in Anpassung an unterschiedlich große Laminatoren eine wirtschaftliche Herstellung unterschiedlich großer und unterschiedlich gestalteter Heizplatten erlaubt. Außerdem ist so bei Bedarf ein einfacher und schneller Austausch eines einzelnen Teils der Heizplatte möglich, beispielsweise wenn in einer Zusatzheizplatte deren Heizeinrichtung ausfällt. Längere und teure Stillstände des Laminators werden so vermieden.

Vorteilhafte Wege zur Verbindung der Zusatzheizplatten mit dem zentralen Heizplattenteil und ggf. auch untereinander sind eine Schraubverbindung oder eine Steckverbindung oder eine Fügeverbindung.

Wenn eine besonders hohe Gleichmäßigkeit der Temperaturverteilung an der Oberfläche der Heizplatte bei deren Ausführung in Segmentbauweise gewährleistet sein muss, können gemäß einer weiteren Ausführung der das Hauptheizfeld bildende Hauptheizplattenteil und die mit diesem verbundenen, die Zusatzheizfelder bildenden Zusatzheizplatten an ihrer einem zu laminierenden Bauteil zugewandten Flachseite wärmeleitend mit einer Deckplatte verbunden sein. Eine derartige Deckplatte sorgt für eine Vergleichmäßigung der Temperatur an der Oberseite der Heizplatte, so dass die Segmentstruktur der eigentlichen Heizplatte sich in der Temperaturverteilung an der Oberseite der Heizplatte nicht mehr oder kaum noch widerspiegelt. Außerdem kann die Deckplatte austauschbar sein, z.B. in Anpassung an unterschiedliche zu erhitzende Gegenstände.

Eine zweite Lösung der Aufgabe gelingt erfindungsgemäß mit einem Laminator der eingangs genannten Art, der dadurch gekennzeichnet ist, dass die Heizplatte mehrlagig mit mehreren Heizebenen ausgeführt ist, von denen eine Heizebene das Hauptheizfeld und mindestens eine weitere Heizebene das Zusatzheizfeld bildet, dass wenigstens zwei Heizebenen in Heizfeldsegmente unterteilt sind und dass die Heizfeldsegmente der verschiedenen Heizebenen einander überlappen. Auch in dieser Ausgestaltung kann die gewünschte gute Temperaturverteilung an der Oberseite der Heizplatte hergestellt und im Betrieb eingehalten werden, wobei hier zugleich eine vorteilhafte Modulbauweise möglich ist. Die Überlappung der Heizfeldsegmente sorgt dafür, dass sich die Grenzen der einzelnen Heizfeldsegmente an der Oberseite der Heizplatte nicht in deren Oberflächentemperatur abbilden, vielmehr wird eine gleichmäßige Temperaturverteilung erzielt.

Aus Gründen einer guten mechanischen Stabilität und/oder einer guten Temperaturverteilung ist weiter vorgesehen, dass die in die Heizfeldsegmente unterteilten Heizebenen auf einer durchgehenden Grundplatte und/oder unter einer durchgehenden Deckplatte angeordnet sind. Die Grundplatte und/oder die Deckplatte können dabei in sich unbeheizte oder alternativ in sich beheizte Platten sein.

Im Folgenden werden Beispiele für eine herkömmliche Heizplatte eines Laminators und für Heizplatten von erfindungsgemäßen Laminatoren anhand einer Zeichnung erläutert. Die Figuren der Zeichnung zeigen:
- Figur 1: eine Heizplatte eines Laminators gemäß dem Stand der Technik, in Draufsicht in einer schematischen Darstellung,
- Figur 2: eine Heizplatte eines Laminators gemäß dem Stand der Technik, in Draufsicht in schematischer Darstellung,
- Figur 3: eine dreilagige Heizplatte eines erfindungsgemäßen Laminators, in einer schematischen perspektivischen Ansicht,
- Figur 4: eine zweite, zweilagige Heizplatte eines erfindungsgemäßen Laminators, in Draufsicht in schematischer Darstellung, und
- Figur 5: eine dritte, dreilagige Heizplatte eines erfindungsgemäßen Laminators, in einer schematischen perspektivischen Ansicht.

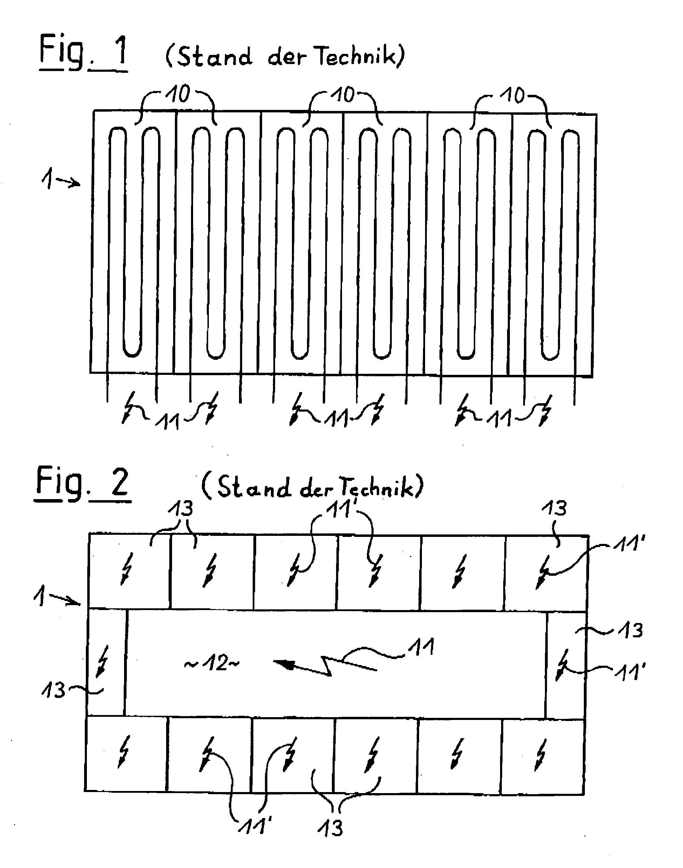

Die in Figur 1 dargestellte Heizplatte 1 eines Laminators, der hier im übrigen nicht dargestellt ist, besitzt in Draufsicht gesehen einen üblichen, rechteckigen Umriss, wobei die in Figur 1 obere und untere Seite der Heizplatte 1 deren Längsseiten und die in Figur 1 links und rechts liegenden Seiten deren Stirnseiten bilden.

Weiterhin ist die Heizplatte 1 gemäß Figur 1 in hier insgesamt sechs Heizzonen 10 unterteilt, die jeweils einen quer zur Längsrichtung der Heizplatte 1 verlaufenden Streifen bilden. In jeder Heizzone 10 ist je eine eigene elektrische Heizeinrichtung 11 vorgesehen, die durch einen Heizdraht oder einen Heizstab gebildet ist, der hier jeweils durch eine in Schleifen verlaufende Linie angedeutet ist. In der Realität liegt die Heizeinrichtung 11 mit ihren Heizdraht- oder Heizstabschleifen im Inneren der Heizplatte 1 und ist von oben her nicht sichtbar.

Zur Temperaturerfassung dienen ein oder mehrere, hier nicht eigens dargestellte Temperaturmessfühler in oder an der Heizplatte.

Eine ebenfalls hier nicht dargestellte Regeleinrichtung regelt nach Maßgabe der erfassten Ist-Temperatur der Heizplatte und einer vorgebbaren Soll-Temperatur die Leistung der Heizeinrichtungen 11.

Figur 2 zeigt ein weiteres Beispiel für eine Heizplatte 1 eines Laminators gemäß dem Stand der Technik. Charakteristisch ist für diese Heizplatte 1, dass sie ein in ihrem zentralen Bereich liegendes Hauptheizfeld 12 sowie mehrere dieses randseitig umgebende Zusatzheizfelder 13 aufweist.

Das Hauptheizfeld 12 besitzt eine erste Heizeinrichtung 11 für seine elektrische Beheizung. Alle Zusatzheizfelder 13 besitzen jeweils eine eigene Heizeinrichtung 11'. Jeder Heizeinrichtung 11, 11' ist jeweils mindestens ein hier nicht dargestellter Temperaturmessfühler zugeordnet, der die Ist-Temperatur des betreffenden Heizfeldes 12, 13 erfasst und an eine ebenfalls hier nicht dargestellte, vorzugsweise elektronisch arbeitende Regeleinrichtung liefert. Durch die Regeleinrichtung ist die Heizleistung jeder Heizeinrichtung 11, 11' so regelbar, dass eine vorgebbare Soll-Temperatur in jedem Heizfeld 12, 13 erreicht und eingehalten wird.

Durch die randseitig angeordneten, das Hauptheizfeld 12 umgebenden Zusatzheizfelder 13 der Heizplatte 1 können die an Randbereichen der Heizplatte 1 erhöhten Wärmeverluste durch Wärmeabstrahlung an die Umgebung ausgeglichen werden, indem dort über die Zusatzheizfelder 13 und deren Heizeinrichtungen 11' eine höhere Wärmeenergiemenge pro Flächeneinheit zugeführt wird als dies im zentralen Hauptheizfeld 12 geschieht. Über die gesamte Oberfläche der Heizplatte 1 gesehen wird damit eine gleichmäßigere Temperaturverteilung erzielt, die aber im Bereich der Grenzen zwischen den einzelnen Heizelementen noch verbesserungswürdig ist.

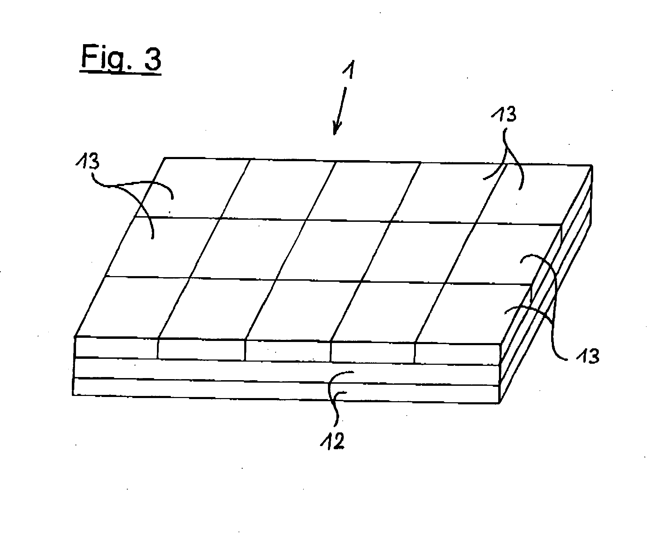

Figur 3 zeigt eine mehrlagige, hier dreilagige Heizplatte 1 eines erfindungsgemäßen Laminators. Die beiden unteren Lagen der Heizplatte 1 werden durch je eine über ihre Fläche gesehen einheitliche Heizzone 12 gebildet, bei denen der Eintrag an Wärmeenergie über die Fläche gesehen gleichmäßig ist.

Die obere Lage dieser Heizplatte 1 wird durch mehrere, hier insgesamt fünfzehn Zusatzheizplatten gebildet, die jeweils ein Zusatzheizfeld 13 darstellen. Die die Zusatzheizfelder 13 bildenden Heizplatten sind untereinander und zweckmäßig auch mit der darunterliegenden, das obere Hauptheizfeld 12 bildenden Lage oder Platte verbunden, so dass sich eine insgesamt stabile Heizplatte 1 ergibt. Außerdem liegen die Zusatzheizplatten für die einzelnen Zusatzheizfelder 13 dicht an dicht nebeneinander, so dass sie eine glattflächige Oberseite der Heizplatte 1 bilden.

Jedem Zusatzheizfeld 13 in der oberen Lage der Heizplatte 1 ist je eine eigene Heizeinrichtung und zweckmäßig auch je ein eigener Temperaturmessfühler zugeordnet, wobei diese Teile der Heizplatte 1 nicht eigens dargestellt sind, da sie unsichtbar im Inneren der Heizplatte 1 liegen.

Bei der Heizplatte 1 gemäß Figur 3 sorgen die Heizzonen 12 in den beiden unteren Lagen für eine gleichmäßige Grundbeheizung der Heizplatte 1, während über die Zusatzheizfelder 13 eine gezielte Beeinflussung und bedarfsweise Korrektur der Temperaturverteilung an der Oberseite der Heizplatte 1 bewirkt werden kann.

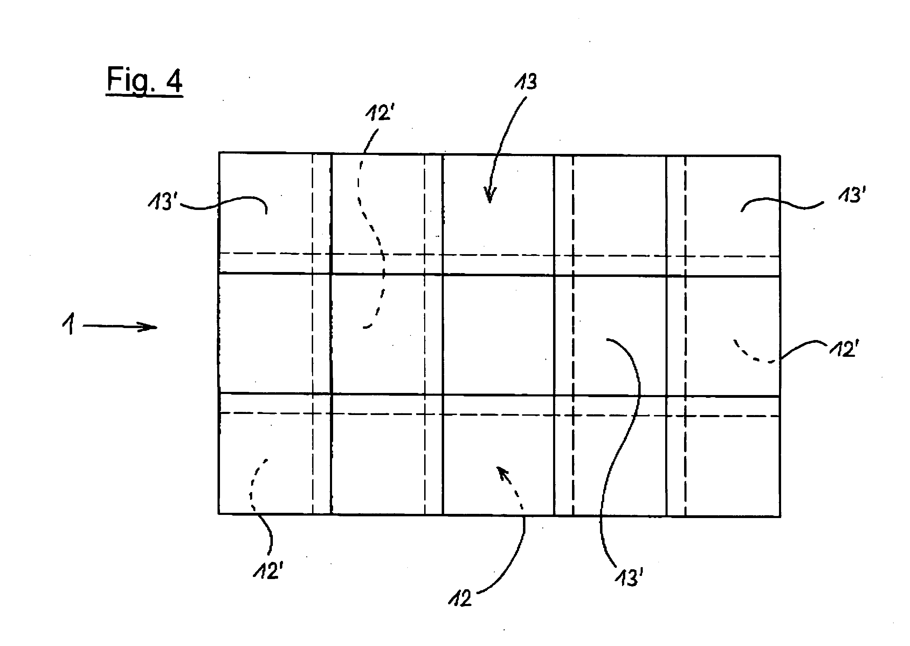

Figur 4 zeigt eine Heizplatte 1 eines Laminators, die zweilagig, also mit zwei Heizebenen ausgeführt ist. Im dargestellten Beispiel gemäß Figur 4 bildet dabei die hier untere Heizebene das Hauptheizfeld 12 und die obere, dem Betrachter zugewandte Heizebene das Zusatzheizfeld 13. Sowohl das Hauptheizfeld 12 als auch das Zusatzheizfeld 13 ist hier in Segmente 12' bzw. 13' unterteilt, denen jeweils eine eigene Heizeinrichtung und auch jeweils ein eigener Temperaturmessfühler zugeordnet ist, wobei hier die einzelnen Heizeinrichtungen und Messfühler nicht eigens dargestellt sind.

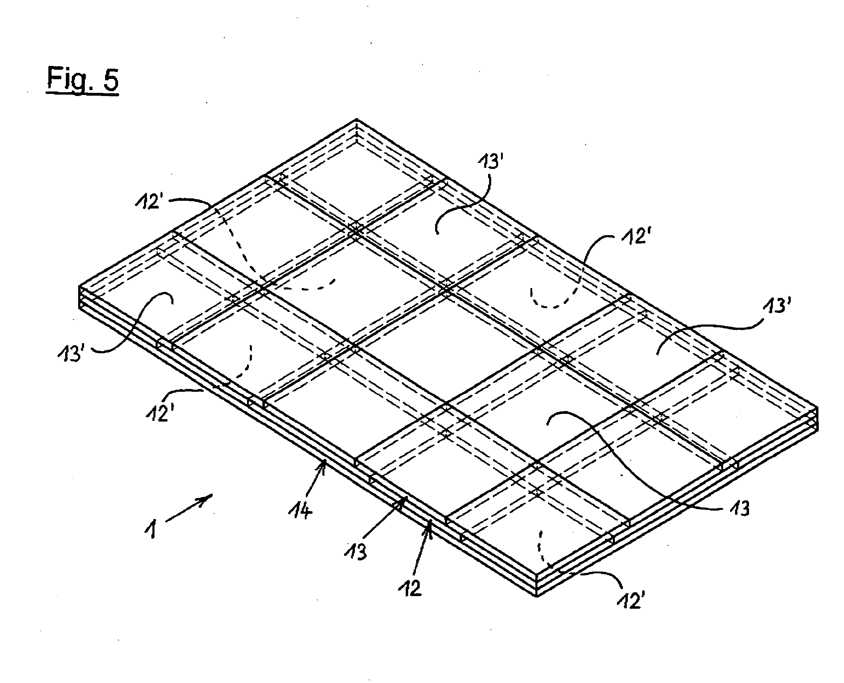

Wesentlich ist bei der Heizplatte 1 gemäß Figur 4, dass die Segmente 12' und 13' der beiden verschiedenen Heizzonen unterschiedliche Größen aufweisen, wodurch eine Überlappung der Segmente 12' und 13' der beiden übereinanderliegenden Heizebenen erreicht wird. Dies wird durch den in Figur 5 in gestrichelten Linien dargestellten Verlauf der Segmente 12' und den davon abweichenden Verlauf der in durchgezogenen Linien dargestellten Segmente 13' deutlich. Die Überlappung sorgt dafür, dass sich die einzelnen Segmente 12', 13' in der Verteilung der Temperatur an der Oberfläche der Heizplatte 1 nicht abbilden. Vielmehr wird durch diese Überlappung eine gleichmäßig Wärme- und Temperaturverteilung an der Oberfläche der Heizplatte 1 erreicht, wobei durch die Aufteilung in relativ viele, hier insgesamt 2 x 15, also 30 Segmente, eine gute bereichsweise Regelung der Temperatur je nach dem örtlich vorliegenden Wärmeverbrauch möglich ist. Außerdem führt die Überlappung der Segmente zu einer guten mechanischen Stabilität der Heizplatte 1 in sich, wenn die einzelnen Segmente 12' und 13' als Einzelteile vorgefertigt und dann miteinander zu der Heizplatte 1 verbunden werden.

Die Heizplatte 1 kann auch einstückig hergestellt sein, wobei dann die Heizeinrichtungen 12', 13' in die Heizplatte 1 integriert sind. Die Oberfläche der Heizplatte 1, die mit einem zu erwärmenden Gegenstand in Kontakt tritt, ist dann eine materialeinheitliche Fläche ohne jegliche Unstetigkeit.

Alternativ kann die Heizplatte 1 auch in Segmentbauweise aus einzelnen Teilen zusammengesetzt sein, wobei vorzugsweise mehrere Zusatzheizplatten 13', die je ein Zusatzheizfeld 13 bilden, miteinander und mit einer zentralen Hauptheizplatte, die das Hauptheizfeld 12 bildet, verbunden sind. Dabei kann das Verbinden beispielsweise über lösbare Schraub- oder Steckverbindungen oder über Fügeverbindungen erfolgen.

Figur5 zeigt als letztes Beispiel für eine Heizplatte 1 eines Laminators eine Ausführung, bei der die Heizplatte 1 dreilagig ist. Dabei umfasst die Heizplatte 1 eine obere Heizebene, die ein Zusatzheizfeld 13 darstellt, sowie eine mittlere Heizebene, die das Hauptheizfeld 12 bildet.

Die untere Lage bildet bei dieser Heizplatte 1 eine durchgehende Grundplatte 14. Die Grundplatte 14 kann dabei eine unbeheizte oder alternativ auch eine in sich beheizte Platte sein.

Das Hauptheizfeld 12 und das Zusatzheizfeld 13 sind, in ähnlicher Ausführung wie bei dem Beispiel gemäß Figur 4, in überlappende Segmente 12' und 13' unterteilt, wodurch die schon im Zusammenhang mit der Figur 4 erläuterten Vorteile erreicht werden. Die Grundplatte 14 dient insbesondere zur Erzielung einer hohen mechanischen Stabilität der Heizplatte 1 insgesamt. Alternativ zu der Grundplatte 14 oder zusätzlich dazu kann auch oberseitig eine durchgehende Platte angeordnet werden, die dann ebenfalls zur mechanischen Stabilität beiträgt und die außerdem zu einer Vergleichmäßigung der Temperaturverteilung an der Oberfläche der Heizplatte 1 beitragen kann.

## Patentansprüche

1. Laminator für das Laminieren von Bauteilen, insbesondere Solarzellenmodule oder Verbundglasscheiben, durch kombinierte Anwendung von Andrückkraft und Wärme, wobei der Laminator für das Erzeugen der Wärme wenigstens eine Heizplatte (1) aufweist, wobei die Heizplatte (1) durch wenigstens eine elektrische Heizeinrichtung (11) auf eine vorgebbare Soll-Temperatur aufheizbar ist, wobei in oder an der Heizplatte (1) mindestens ein Meßfühler zur Erfassung der Ist-Temperatur der Heizplatte (1) angeordnet ist, wobei mittels einer Regeleinrichtung die Heizleistung der Heizeinrichtung (11) nach Maßgabe der Differenz zwischen Soll- und Ist-Temperatur regelbar ist und wobei die Heizplatte (1) mindestens ein Hauptheizfeld (12) und mindestens ein Zusatzheizfeld (13) mit einer gegenüber dem Hauptheizfeld (12) unabhängig regelbaren Heizleistung aufweist,
**dadurch gekennzeichnet,**
**daß** die Heizplatte (1) mehrlagig ist und daß mehrere Zusatzheizfelder (13) unter und/oder über dem mindestens einen Hauptheizfeld (12) vorgesehen sind.

2. Laminator nach Anspruch 1, **dadurch gekennzeichnet, daß** für jedes Zusatzheizfeld (13) ein dessen Ist-Temperatur erfassender Meßfühler vorgesehen ist und daß jedes Zusatzheizfeld (13) eine eigene, hinsichtlich ihrer Heizleistung nach Maßgabe der Differenz zwischen einer vorgebbaren Soll-Temperatur und der erfaßten Ist-Temperatur separat regelbare Heizeinrichtung (11') aufweist.

3. Laminator nach Anspruch 1 oder 2, **dadurch gekennzeichnet, daß** die Zusatzheizfelder (13) relativ zum Hauptheizfeld (12) in oder an der Heizplatte (1) frei plazierbar sind.

4. Laminator nach einem der Ansprüche 1 bis 3, **dadurch gekennzeichnet, daß** über die Fläche der Heizplatte (1) gesehen das mindestens eine Hauptheizfeld (12) zentral angeordnet ist.

5. Laminator nach einem der vorhergehenden Ansprüche, **dadurch gekennzeichnet, daß** die Heizplatte (1) durch eine gängigen Heizplatte und durch mehrere mit dieser wärmeleitend verbundene, jeweils die zugehörig eigene Heizeinrichtung (11') aufweisende Zusatzheizplatten, die mindestens ein Zusatzheizfeld (13) darstellen, gebildet ist.

6. Laminator nach Anspruch 5, **dadurch gekennzeichnet, daß** die Zusatzheizplatten jeweils mit der gängigen Heizplatte verschraubt oder verklebt sind.

7. Laminator nach einem der vorhergehenden Ansprüche, **dadurch gekennzeichnet, daß** die Heizplatte (1) mehrteilig in Segmentbauweise ausgeführt ist, wobei mindestens ein Hauptheizplattenteil das Hauptheizfeld (12) bildet und wobei mehrere mit diesem verbundene Zusatzheizplatten die Zusatzheizfelder (13) bildern.

8. Laminator nach Anspruch'7, **dadurch gekennzeichnet, daß** die Zusatzheizplatten mit dem Hauptheizplattenteil und/oder untereinander jeweils über eine Schraubverbindung oder eine Steckverbindung oder eine Fügeverbindung verbunden sind.

9. Laminator nach einem der Ansprüche 7 und 8, **dadurch gekennzeichnet, daß** der das Hauptheizfeld (12) bildende Hauptheizplattenteil und die mit diesem verbundenen, die Zusatzheizfelder (13) bildenden Zusatzheizplatten an ihrer einem zu laminierenden Bauteil zugewandten Flachseite wärmeleitend mit einer Deckplatte verbunden sind.

10. Laminator für das Laminieren von Bauteilen, insbesondere Solarzellenmodule oder Verbundglasscheiben, durch kombinierte Anwendung von Andrückkraft und Wärme, wobei der Laminator für das Erzeugen der Wärme wenigstens eine Heizplatte (1) aufweist, wobei die Heizplatte (1) durch wenigstens eine elektrische Heizeinrichtung (11) auf eine vorgebbare Soll-Temperatur aufheizbar ist, wobei in oder an der Heizplatte (1) mindestens ein Meßfühler zur Erfassung der Ist-Temperatur der Heizplatte (1) angeordnet ist, wobei mittels einer Regeleinrichtung die Heizleistung der Heizeinrichtung (11) nach Maßgabe der Differenz zwischen Soll- und Ist-Temperatur regelbar ist und wobei die Heizplatte (1) mindestens ein Hauptheizfeld (12) und mindestens ein Zusatzheizfeld (13) mit einer gegenüber dem Hauptheizfeld (12) unabhängig regelbaren Heizleistung aufweist,
**dadurch gekennzeichnet,**
**daß** die Heizplatte (1) mehrlagig mit mehreren Heinzebenen ausgeführt ist, von denen eine Heizebene das Hauptheizfeld (12) und mindestens eine weitere Heizebene das Zusatzheizfeld (13) bildet, daß wenigstens zwei Heizebenen in Heizfeldsegmente (12', 13') unterteilt sind und daß die Heizfeldsegmente (12', 13') der verschiedenen Heizebenen einander überlappen.

11. Laminator nach Anspruch 10, **dadurch gekennzeichnet, daß** für jedes Heizfeldsegment (12', 13') ein dessen Ist-Temperatur erfassender Meßfühler vorgesehen ist und daß jedes Heizfeldsegment (12', 13') eine eigene, hinsichtlich ihrer Heizleistung nach Maßgabe der Differenz zwischen einer vorgebbaren Soll-Temperatur und der erfaßten Ist-Temperatur separat regelbare Heizeinrichtung (11') aufweist.

12. Laminator nach Anspruch 10 oder 11, **dadurch gekennzeichnet, daß** die in die Heizfeldsegmente (12', 13') unterteilten Heizebenen auf einer durchgehenden Grundplatte (14) und/oder unter einer durchgehenden Deckplatte angeordnet sind.

## Claims

1. Laminator for laminating structural components, in particular solar module cells or laminated glass panes by combining pressing force and heat, wherein the laminator comprises at least one heating plate (1) for generating heat, wherein the heating plate (1) is heatable by at least one electrical heating device (11) to a specifiable nominal temperature, wherein at least one sensor is arranged in or on the heating plate (1) for recording the actual temperature of the heating plate (1), wherein the heat output of the heating device (11) is controllable by means of a control device in accordance with the difference between nominal and actual temperature, and wherein the heating plate (1) comprises at least one main heating field (12) and at least one additional heating field (13) with a heat output controllable independent of the main heating field (12), **characterized in that** the heating plate (1) is multilayered and that a plurality of additional heating fields (13) is provided under and/or over the at least one main heating field (12).

2. Laminator according to claim 1, **characterized in that** for each additional heating field (13) a sensor is provided for recording its actual temperature, and that each additional heating field (13) comprises its own heating device (11') which is separately controllable with regard to its heat output in accordance with the difference between a specifiable nominal temperature and the recorded actual temperature.

3. Laminator according to claim 1 or 2, **characterized in that** the additional heating fields (13) are freely placeable in or on the heating plate (1) relative to the main heating field (12).

4. Laminator according to any one of the claims 1 to 3, **characterized in that** the at least one main heating field (12) is centrally arranged seen over the surface of the heating plate (1).

5. Laminator according to any one of the preceding claims, **characterized in that** the heating plate (1) is formed by a standard heating plate and by a plurality of additional heating plates which are heat-conductingly connected with it, each having its appropriately own heating device (11'), which present at least one additional heating field (13).

6. Laminator according to claim 5, **characterized in that** the additional heating plates are each screwed or glued with the standard heating plate.

7. Laminator according to any one of the preceding claims, **characterized in that** the heating plate (1) is designed sectionalized in segment construction, wherein at least one main heating plate part forms the main heating field (12) and wherein a plurality of additional heating plates connected with it forms the additional heating fields (13).

8. Laminator according to claim 7, **characterized in that** the additional heating plates are each connected with the main heating plate part and/or among each other via a screw connection or a plug connection or a jointing connection.

9. Laminator according to one of the claims 7 and 8, **characterized in that** the main heating plate part forming the main heating field (12) and the additional heating plates forming the additional heating fields (13) being connected with it are heat-conductingly connected with a cover plate on their flat side facing a component to be laminated.

10. Laminator for laminating structural components, in particular solar module cells or laminated glass panes by combining pressing force and heat, wherein the laminator comprises at least one heating plate (1) for generating heat, wherein the heating plate (1) is heatable by at least one electrical heating device (11) to a specifiable nominal temperature, wherein at least one sensor is arranged in or on the heating plate (1) for recording the actual temperature of the heating plate (1), wherein the heat output of the heating device (11) is controllable by means of a control device in accordance with the difference between nominal and actual temperature, and wherein the heating plate (1) comprises at least one main heating field (12) and at least one additional heating field (13) with a heat output controllable independent of the main heating field (12), **characterized in that** the heating plate (1) is multilayered with a plurality of heating levels, of which one heating level forms the main heating field (12) and at least one additional heating level forms the additional heating field (13), that at least two heating levels are subdivided into heating field segments (12', 13') and that the heating field segments (12', 13') of the different heating levels overlap each other.

11. Laminator according to claim 10, **characterized in that** for each heating field segment (12', 13') a sensor is provided which records its actual temperature, and that each heating field segment (12', 13') comprises its own heating device (11') which is separately controllable with regard to its heat output in accordance with the difference between a specifiable nominal temperature and the recorded actual temperature.

12. Laminator according to claim 10 or 11, **characterized in that** the heating levels subdivided into the heating field segments (12', 13') are arranged on a continuous base plate (14) and/or under a continuous cover plate.

## Revendications

1. Dispositif à stratifier pour la stratification de composants, en particulier de modules de cellules solaires ou de vitres en verre feuilleté, par utilisation combinée de la force de pression et de la chaleur, sachant que pour produire la chaleur, le dispositif à stratifier présente au moins une plaque chauffante (1),que la plaque chauffante (1) peut être chauffée, par au moins un dispositif de chauffage (11) électrique, à une température de consigne pouvant être prédéterminée, qu'au moins une sonde permettant de capter la température réelle de la plaque chauffante (1) est disposée dans ou contre la plaque chauffante (1), que la puissance de chauffage du dispositif de chauffage (11) peut être réglée au moyen d'un dispositif de régulation en fonction de la différence entre la température de consigne et la température réelle, et que la plaque chauffante (1) présente au moins une zone de chauffe principale (12) et au moins une zone de chauffe supplémentaire (13) dont la puissance de chauffage peut être réglée indépendamment de la zone de chauffe principale (12),
**caractérisé en ce**
**que** la plaque chauffante (1) est composée de plusieurs couches et que plusieurs zones de chauffe supplémentaires (13) sont prévues au-dessous et/ou au-dessus de la zone de chauffe principale (12) au moins en présence.

2. Dispositif à stratifier selon la revendication 1, **caractérisé en ce qu'**est prévue pour chaque zone de chauffe supplémentaire (13) une sonde captant la température réelle de cette zone, et que chaque zone de chauffe supplémentaire (13) présente un dispositif de chauffage (11') individuel dont la puissance de chauffage peut être réglée séparément en fonction de la différence entre la température de consigne pouvant être prédéterminée et la température réelle captée.

3. Dispositif à stratifier selon la revendication 1 ou 2, **caractérisé en ce que** les zones de chauffe supplémentaires (13) peuvent être placées librement par rapport à la zone de chauffe principale (12), dans ou contre la plaque chauffante (1).

4. Dispositif à stratifier selon l'une des revendications 1 à 3, **caractérisé en ce que**, considérant la surface de la plaque chauffante (1) par le haut, la zone de chauffe principale (12) au moins en présence est disposée de manière centrale.

5. Dispositif à stratifier selon l'une des revendications précédentes, **caractérisé en ce que** la plaque chauffante (1) est composée d'une plaque chauffante courante et de plusieurs plaques chauffantes supplémentaires reliées de manière thermoconductrice à la plaque chauffante principale et présentant respectivement leur propre dispositif de chauffage (11'), lesquelles plaques forment au moins une zone de chauffe supplémentaire (13).

6. Dispositif à stratifier selon la revendication 5, **caractérisé en ce que** les plaques chauffantes supplémentaires sont respectivement vissées ou collées à la plaque chauffante courante.

7. Dispositif à stratifier selon l'une des revendications précédentes, **caractérisé en ce que** la plaque chauffante (1) est conçue en plusieurs parties sous forme de segments, sachant qu'au moins une partie de plaque chauffante principale forme la zone de chauffe principale (12) et que plusieurs plaques chauffantes supplémentaires, reliées à la partie principale, forment les zones de chauffe supplémentaires (13).

8. Dispositif à stratifier selon la revendication 7, **caractérisé en ce que** les plaques chauffantes supplémentaires sont reliées à la partie de plaque chauffante principale et/ou entre elles respectivement par vissage ou emboîtement ou assemblage.

9. Dispositif à stratifier selon l'une des revendications 7 et 8, **caractérisé en ce que** la partie de plaque chauffante principale formant la zone de chauffe principale (12) et les plaques de chauffe supplémentaires reliées à la partie principale et formant les zones de chauffe supplémentaires (13) sont, sur leur côté plat orienté vers un composant à stratifier, reliées de manière thermoconductrice à une plaque de recouvrement.

10. Dispositif à stratifier pour la stratification de composants, en particulier de modules de cellules solaires ou de vitres en verre feuilleté, par utilisation combinée de la force de pression et de la chaleur, sachant que pour produire la chaleur, le dispositif à stratifier présente au moins une plaque chauffante (1), que la plaque chauffante (1) peut être chauffée, par au moins un dispositif de chauffage (11) électrique, à une température de consigne pouvant être prédéterminée, qu'au moins une sonde permettant de capter la température réelle de la plaque chauffante (1) est disposée dans ou contre la plaque chauffante (1), que la puissance de chauffage du dispositif de chauffage (11) peut être réglée au moyen d'un dispositif de régulation en fonction de la différence entre la température de consigne et la température réelle, et que la plaque chauffante (1) présente au moins une zone de chauffe principale (12) et au moins une zone de chauffe supplémentaire (13) dont la puissance de chauffage peut être réglée indépendamment de la zone de chauffe principale (12),
**caractérisé en ce**
**que** la plaque chauffante (1) est composée de plusieurs couches avec plusieurs niveaux de chauffage, parmi lesquels un niveau de chauffage forme la zone de chauffe principale (12) et au moins un autre niveau de chauffage forme la zone de chauffe supplémentaire (13), qu'au moins deux niveaux de chauffage sont divisés en segments de zone de chauffe (12', 13'), et que les segments de zone de chauffe (12', 13') des différents niveaux de chauffage se chevauchent.

11. Dispositif à stratifier selon la revendication 10, **caractérisé en ce qu'**est prévue pour chaque segment de zone de chauffe (12', 13') une sonde captant la température réelle du segment, et que chaque segment de zone de chauffe (12', 13') présente un dispositif de chauffage (11') individuel dont la puissance de chauffage peut être réglée séparément en fonction de la différence entre la température de consigne pouvant être prédéterminée et la température réelle captée.

12. Dispositif à stratifier selon la revendication 10 ou 11, **caractérisé en ce que** les niveaux de chauffage divisés en segments de zone de chauffe (12', 13') sont disposés sur une plaque de fond continue (14) et/ou sous une plaque de recouvrement continue.
